# DEMANDE DE BREVET EUROPEEN

(11) **EP 3 753 398 A1**
(43) Date de publication de la demande: **23.12.2020**
(21) Numéro de dépôt: 20180846.6
(22) Date de dépôt: 18.06.2020
(51) Int. Cl.: A01G 9/02, B01D 53/84, F24F 3/16, B01D 39/16

(54) **BAC DE CULTURE VEGETALE INTEGRANT UN BIOFILTRE EN FIBRES ET UTILISATION DE CELUI-CI POUR LA BIOREMEDIATION ET LA REGULATION HYDRIQUE DE L'AIR**

(30) Priorité: 18.06.2019 FR 1906553
(71) Demandeur: EZEEPLANT, 63120 Vollore-Ville (FR); Biovitis, 63360 Saint-Beauzire (FR); C E P, 63550 Saint-Remy-sur-Durolle (FR)
(72) Inventeur: MARTINET, Jean-Philippe, 74210 Faverges (FR); VADUREAU, Nicolas, 1262 Eysins (CH); GERBORE, Jonathan, 33770 Salles (FR); GROS, Mathilde, 63200 Menetrol (FR); TERRISSE, Fanny, 63370 Lempdes (FR); BERTHON, Jean-Yves, 63540 Romagnat (FR); DAMBRICOURT, Pierre, 63120 Vollore-Ville (FR)
(74) Mandataire: Cabinet Laurent & Charras

(57) **Abrégé**

La présente invention concerne un bac de culture végétale comprenant un pot (3), un biofiltre (1) comprenant un support à base de fibres, imprégné de microorganismes, ledit support comprenant au moins deux faces principales.

## Description

### DOMAINE DE L'INVENTION

La présente invention concerne les domaines de la bioremédiation et de la régulation hydrique de l'air. En particulier, la présente invention concerne un bac de culture végétale intégrant un biofiltre pour assainir et humidifier l'air d'une pièce ou d'un bâtiment.

### ETAT ANTERIEUR DE LA TECHNIQUE

La dépollution représente un enjeu majeur pour la santé que ce soit à l'intérieur ou à l'extérieur de bâtiments. En particulier, les polluants tels que les composés organiques volatiles (COV) et les oxydes d'azote (NOx) peuvent se révéler nocifs pour l'homme et pour l'environnement. Ces polluants peuvent être traités, voire valorisés, par l'utilisation de biofiltres. Les biofiltres comprennent des bactéries qui dégradent les COV et les NOx en nutriments pour les espèces végétales. Les biofiltres peuvent donc avantageusement être intégrés à des plantations de végétaux, que ce soit en pleine terre ou hors sol.

En outre, les biofiltres représentent une technologie suscitant un fort intérêt car ils présentent l'avantage certain de ne nécessiter que des produits naturels et leur production impacte donc peu l'environnement. Cependant, les biofiltres sont souvent intégrés à des systèmes complexes qui nécessitent des équipements coûteux.

La demande de brevet internationale WO 2012/085439 divulgue un mur végétal comprenant une structure composée de casiers comportant un châssis et des zones grillagées. Ce système, bien qu'apportant satisfaction, présente quelques inconvénients comme, par exemple, la nécessité d'une pompe et d'un système de canalisation pour faire circuler l'air à travers le substrat qui est constitué de terreau.

Pour remédier à ces inconvénients, il a été proposé de modifier la structure des casiers de sorte à améliorer la circulation de l'air à travers le terreau, comme décrit dans la demande de brevet internationale WO 2017/118814.

Dans ces deux systèmes, le biofiltre est composé d'un substrat, généralement de la terre végétale ou des composants habituellement utilisés pour constituer du terreau horticole, ayant une action bactérienne via la présence de bactéries naturellement présentes telles que *Pseudomonas sp., Bacillus sp.,* ... permettant la dégradation des polluants. Ainsi, il est difficile de changer ce biofiltre car il faut retirer le substrat et le remplacer, ce qui peut provoquer des dégradations des racines des végétaux, et par conséquent des végétaux eux-mêmes, dans le cas de murs végétaux ou de plantations hors sol. Par ailleurs, il est nécessaire d'enrichir le substrat en éléments nutritifs pour maintenir la croissance et ainsi l'action bactérienne.

Le document WO 2008/025365 décrit une méthode permettant de décontaminer un gaz en faisant passer ce gaz à travers un filtre en forme de tube. Ce filtre est utilisé sur les toits de bâtiments. Il n'est pas destiné à être en contact permanent avec un substrat pour la culture végétale, et encore moins dans un bac de culture végétale.

Le document WO 2015/154543 décrit un filtre antimicrobien ayant une structure composite d'au moins trois couches.

Le document US 2006/117958 décrit un filtre purificateur d'air.

Le document CN 204513666 décrit un pot de fleur intégrant un purificateur d'air.

Le document KR 20160148170 décrit un système de purification de l'air mettant en œuvre un substrat de culture végétale, des plantes et un filtre minéral (zéolite ou illite). En outre, ce système peut comprendre un filtre microbien positionné à l'extérieur du pot de culture végétale. Ce filtre microbien n'est pas destiné à être en contact avec le substrat pour la culture végétale. Au contraire, dans ce système, l'air traverse le substrat de culture végétale, puis le filtre minéral et, finalement, le filtre microbien. Le filtre microbien est donc positionné en aval de la purification de l'air. D'autre part, ce système peut comprendre, au niveau du filtre microbien, un réservoir permettant de récupérer les eaux usées. Ce réservoir ne sert pas à alimenter les plantes en eau.

De manière générale, les biofiltres sont installés en extérieur, pour assainir l'atmosphère des grandes villes ou encore des sites industriels émettant des composés malodorants ou des boues toxiques.

L'utilisation des biofiltres en intérieur peut également être envisagée car l'air intérieur est souvent plus chargé de composés aéropolluants que l'air extérieur en raison des systèmes de chauffage, de la climatisation et de l'omniprésence des produits chimiques et équipements domestiques. De surcroît, le chauffage et la climatisation ont tendance à assécher l'air d'une pièce.

Il serait donc avantageux de disposer d'un biofiltre ne nécessitant pas un système de mise en œuvre complexe, pouvant être installé en intérieur, pouvant être renouvelé facilement sans risque de détérioration de la plante, et ne nécessitant pas d'apporter des nutriments de manière régulière pour maintenir en vie l'activité biofiltre. Il serait également avantageux de disposer d'un biofiltre jouant également le rôle de régulateur hydrique, afin d'humidifier l'air ambiant d'une pièce.

### EXPOSE DE L'INVENTION

Pour répondre à ces besoins, les Demanderesses ont mis au point un biofiltre à base de fibres (avantageusement végétales) pouvant s'intégrer facilement dans un bac de culture végétale.

Un biofiltre, ou filtre biologique, correspond à un dispositif associant une épuration biologique de composés polluants à traiter d'une matrice (air, gaz ou liquide) par cultures microbiennes fixées sur un support. Ce support peut être poreux ou non.

Un bac de culture désigne un contenant de culture, c'est-à-dire un dispositif permettant la culture de végétaux, notamment des plantes horticoles.

Plus particulièrement, la présente invention concerne un bac de culture végétale intégrant un biofiltre comprenant un support à base de fibres (avantageusement végétales), imprégné de microorganismes, ledit support comprenant au moins deux faces principales.

Le procédé de fabrication de ce biofiltre, comprenant une étape de formation d'un support à base de fibres (avantageusement végétales) et une étape d'imprégnation desdites fibres avec des microorganismes, ladite étape d'imprégnation (ou inoculation) étant réalisée avant et/ou après ladite étape de formation dudit support.

Le bac de culture végétale selon l'invention comprend un pot et un biofiltre présentant au moins deux faces principales. Le biofiltre est positionné dans un volume délimité par le pot. Le bac de culture végétale présente un couloir de circulation d'air entre le pot et une des faces principales du biofiltre, l'autre face principale du biofiltre étant destinée à être en contact physique avec un substrat pour la culture végétale.

Un autre objet de l'invention concerne l'utilisation de ce bac de culture végétale pour dépolluer et pour humidifier l'air.

La présente invention permet ainsi la bioremédiation et la régulation hydrique de l'air.

### Les microorganismes

Les microorganismes constituent les éléments essentiels qui permettent au biofiltre de remplir sa fonction dépolluante en dégradant les polluants, par exemple les composés organiques volatiles (COV), des composés tels que benzène, toluène, éthylbenzène xylènes (communément dénommés Btex), les oxydes d'azote (NOx), et les oxydes de carbone (CO, CO₂).

Le terme microorganisme englobe les bactéries, les champignons et les levures.

De manière générale, les microorganismes sont choisis en fonction des polluants contenus dans l'air à bio-épurer (dépolluer). L'homme du métier saura ajuster le choix des microorganismes et la surface d'échange nécessaire entre le biofiltre et l'air ambiant, selon la qualité de l'air.

De manière générale et dans le cadre de l'invention, on entend par « microorganismes » aussi bien des bactéries, que des levures, que des levures ou champignons, préférentiellement des champignons filamenteux. De tels microorganismes peuvent avantageusement être choisis dans le groupe constitué des genres suivants : *Bacillus,* notamment l'espèce *Bacillus subtilis* ; *Rhodococcus* ; *Pseudomonas,* notamment l'espèce *Pseudomonas fluorescens* ou l'espèce *Pseudomonas putida* ; *Micrococcus* ; *Phanerochaete* ; *Yarrowia,* notamment l'espèce *Yarrowia lipolytica* ; *Trichoderma,* notamment l'espèce *Trichoderma longibrachiatum* ; et leurs mélanges.

Un exemple particulier d'un mélange microbien qui peut être mis en œuvre dans le cadre de l'invention, à savoir pour l'imprégnation du support à base de fibres (avantageusement végétales), comprend l'espèce *Yarrowia lipolytica,* l'espèce *Trichoderma longibrachiatum* et l'espèce *Pseudomonas putida.*

Les microorganismes peuvent être conditionnés sous forme liquide ou solide, par exemple en poudre. Lorsqu'ils sont conditionnés sous forme solide, ils sont avantageusement formulés en milieu liquide pour réaliser l'imprégnation du support à base de fibres (avantageusement végétales).

Ainsi, selon un mode de réalisation privilégié, ces microorganismes sont formulés en milieu liquide, avantageusement en milieu aqueux. Un tel milieu peut comprendre un agent épaississant, tel que par exemple de l'alginate de sodium, facilitant l'imprégnation du support à base de fibres (avantageusement végétales) à l'aide de la solution de microorganismes.

En outre, selon l'invention, un tel milieu peut comprendre des éléments favorisant la survie voire la croissance des microorganismes en présence, tels que des sucres et des oligoéléments. Ainsi, de manière avantageuse, le milieu et le substrat ne nécessitent pas d'ajout supplémentaire et ultérieur d'éléments nutritifs dans le système.

Alternativement, la survie voire la multiplication des microorganismes en présence peut être assurée par les fibres (avantageusement végétales) (support) et/ou le substrat tel que décrits ci-dessous. Dans ces conditions, la présence des microorganismes a été détectée au moins 3 mois après imprégnation (ou inoculation).

### Le support à base de fibres (avantageusement végétales)

La mise en forme du support sera déterminée en fonction de la mise en œuvre du biofiltre. Dans le cadre de la présente invention, le support présente au moins deux faces principales. Le biofiltre correspond à une nappe de fibres (avantageusement végétales). Il s'agit préférentiellement d'un support monocouche. Les fibres peuvent être d'origine végétale et/ou synthétique et/ou d'origine animale. Les fibres sont avantageusement biodégradables.

Le support est avantageusement dépourvu de filtre minéral, par exemple de zéolite ou d'illite.

On désigne par support à base de fibres (avantageusement végétales), un agglomérat de fibres (avantageusement végétales) solidarisées entre-elles ou non. En d'autres termes, le support comprend des fibres (avantageusement végétales) qui forment un ensemble unique et ce, que les fibres soient liées entre-elles ou simplement disposées les unes à côté et/ou sur les autres, sans que des liaisons soient créées entre-elles.

Outre les fibres (avantageusement végétales), le support peut comprendre des tiges végétales et/ou des fragments de tiges végétales et/ou des membranes composées de matières issues de la transformation de matières naturelles.

De manière avantageuse, le support comprend soit des fibres entrelacées, soit des fibres et des tiges entrelacées.

Quoi qu'il en soit, conformément à l'invention, le support à base de fibres (avantageusement végétales) présente au moins deux faces principales. Ainsi, le support, qu'il soit composé de fibres solidarisées entre-elles ou non, présente au moins deux faces distinctes.

Ce support à base de fibres (avantageusement végétales) peut être un paillage ou, plus avantageusement, un non-tissé.

Lorsque le biofiltre est un non-tissé, sa manutention est plus aisée car il n'y a pas de risque de perte de fibres. Un autre avantage de ce mode de réalisation réside dans la plus grande densité de fibres par rapport à un paillage. En outre, le non-tissé peut être consolidé en l'associant à une membrane, par exemple sur la face principale destinée à être en contact physique avec le substrat pour la culture végétale. Cette membrane peut être à base de fibres (avantageusement végétales) ou de matières dérivées de l'agro-transformation. Elle est perméable à l'air et à l'humidité.

De préférence, les fibres végétales sont choisies dans le groupe comprenant les fibres de lin, les fibres de chanvre, les fibres de blé, et leurs mélanges, plus préférentiellement dans le groupe comprenant les fibres de lin et les fibres de chanvre. Les fibres peuvent provenir de sous-produits de production végétale.

De préférence, les fibres synthétiques sont choisies parmi les fibres de polyester (notamment le polyéthylène téréphtalate), les fibres de polyoléfines, les fibres de verre, les fibres d'acide polylactique, et leurs mélanges.

De préférence, les fibres d'origine animale sont choisies parmi la laine, la bourre animale, les fibres kératiniques et leurs mélanges.

De manière générale, les fibres peuvent être issues des filières de recyclage, par exemple le recyclage des bouteilles pour les fibres de polyester.

Il est préférable que le biofiltre présente une épaisseur moyenne comprise entre 1 mm et 10 mm, de préférence entre 2 mm et 4 mm. Le support pouvant présenter des disparités d'épaisseur, l'épaisseur moyenne correspond à la moyenne de la distance maximale entre les deux surfaces principales du biofiltre.

Ce biofiltre présente un grammage avantageusement compris entre 400 g/m² et 750 g/m², plus avantageusement entre 450 g/m² et 550 g/m².

Par ailleurs, pour optimiser l'efficacité du biofiltre, il est préférable de maximiser la quantité d'air en contact avec le biofiltre. Pour ce faire, il est avantageux de créer des turbulences à la surface du biofiltre. En effet, les turbulences créent des flux turbulents qui agitent l'air et augmentent ainsi la quantité d'air en contact avec le biofiltre. Dans le cas où le biofiltre est un paillage, le biofiltre présente naturellement des irrégularités de surface. Ces irrégularités forment des obstacles à la circulation de l'air et provoquent des turbulences en couche limite. Dans le cas où le biofiltre est un non-tissé, le biofiltre présente également une certaine rugosité qui, dans le cadre de la présente invention, permet d'obtenir les turbulences aériennes souhaitées.

La présence de turbulences localisées en surface du support permet d'augmenter le contact physique entre l'air et les fibres (avantageusement végétales) et donc les microorganismes. Ainsi, les polluants (COV, NOx, Btex, CO, CO₂...) sont mis en contact avec les microorganismes, organismes vivants qui transforment les composés aéropolluants en éléments nutritifs du biosystème.

De sorte à assurer une cohésion dans le cas où le support est un paillage et à faciliter la fabrication du non-tissé, les fibres (avantageusement végétales) présentent avantageusement une longueur moyenne comprise entre 5 cm et 25 cm.

Le support peut être de dimensions et de formes variées. En règle générale, dans le cas d'un non-tissé, on prépare des bandes (par exemple des bandes rectangulaires) avantageusement de 0,40 m de largeur et de 0,70 m de longueur. Pour des applications particulières (murs végétaux par exemple), ces bandes peuvent être découpées à des dimensions plus petites et/ou être mises en forme, par exemple en forme de disque ou de cylindre, notamment pour des applications particulières comme les murs végétaux et équipements de poterie horticole.

De manière avantageuse, le support comprend des fibres (avantageusement végétales) ayant un diamètre compris entre 2 mm et 6 mm, plus avantageusement entre 3 mm et 5 mm.

### Procédé de fabrication du biofiltre

Le procédé de fabrication d'un biofiltre comprend une étape de formation d'un support à base de fibres (avantageusement végétales) et une étape d'imprégnation desdites fibres avec des microorganismes.

Dans le mode de réalisation où le support est un paillage, la formation du support se fait directement lors de la mise en œuvre du biofiltre dans son environnement d'utilisation.

Dans le mode de réalisation où le support est un non-tissé, celui-ci est avantageusement réalisé par compactage des fibres et par entrelacement des fibres, avantageusement par jet d'eau.

Comme dit précédemment, l'étape d'imprégnation (ou inoculation) des fibres (avantageusement végétales) par les microorganismes peut être réalisée avant la formation du support, ou après la formation du support. En d'autres termes, l'étape d'imprégnation peut être réalisée directement sur les fibres libres ou directement sur le support mis en forme.

L'avantage de réaliser l'étape d'imprégnation avant la formation du support réside dans une plus grande homogénéité et une plus profonde imprégnation des microorganismes dans le support. Ceci permet de limiter, voire d'éviter la présence, dans le support, de zones n'assurant pas la fonction de biofiltre et permet aux microorganismes de se nourrir des nutriments contenus en profondeur des fibres.

Par ailleurs, dans le mode de réalisation où le biofiltre est un paillage, les fibres imprégnées de microorganismes peuvent être utilisées directement pour la mise en forme du support in-situ. Ainsi, les fibres imprégnées préalablement à la formation du support peuvent être utilisées directement dans l'étape de mise en forme du support quelle que soit la forme désirée du support. Des sous-ensembles composés des nappes de fibres (avantageusement végétales) inoculées de microorganismes, peuvent subir une étape de séchage pour permettre la conservation et le transport.

L'étape d'imprégnation des fibres (avantageusement végétales), sous forme de support ou non, est classiquement réalisée par pulvérisation, par arrosage ou par trempage, avantageusement par trempage des fibres dans une solution de microorganismes. A l'issue de cette étape, il est donc obtenu des fibres (avantageusement végétales), éventuellement sous forme de support, humides et imprégnées des microorganismes. Selon un mode de réalisation particulier, les fibres (avantageusement végétales) ainsi imprégnées sont égouttées et éventuellement soumises à une étape de séchage qui peut être réalisée à température ambiante ou sous un flux d'air chaud, par exemple en étuve, à une température maximale de, avantageusement, 37°C.

### Bac de culture végétale

Comme mentionné précédemment, le bac de culture végétale comprend un pot et un biofiltre. Le bac de culture végétale présente un couloir de circulation d'air sur au moins une des faces du biofiltre et/ou à l'intérieur du substrat. Le substrat est généralement du terreau, avantageusement du terreau horticole.

Le bac de culture végétale est préférentiellement un bac pour plante horticole, comme les plantes ornementales, les plantes aromatiques, les plantes alimentaires comme les légumes et les fruits, et les plantes médicinales.

Le pot peut être en terre cuite, en plastique, en métal. Il peut être de toute forme adaptée à la culture végétale ou au contexte de l'utilisateur. Il peut s'agir d'un bac horizontal ou d'un bac vertical, par exemple un bac vertical destiné à former un mur végétalisé. La forme du bac peut ainsi être adaptée en fonction du lieu dans lequel il est utilisé.

Ainsi, le bac de culture végétale peut être un mur végétal.

La forme du bac peut notamment être parallélépipédique ou cylindrique. En utilisation horizontale, il comprend généralement un fond et une ou plusieurs parois latérales. En utilisation verticale, il comprend généralement un fond et une ou plusieurs parois horizontales.

Le couloir d'air entre une face principale du biofiltre et le pot peut être formé par un grillage, ou par un matériau poreux, par exemple des billes d'argile ou de la pouzzolane. Lorsque le matériau est poreux il permet également le stockage d'eau.

Bien entendu, lorsque le bac de culture végétale selon l'invention est utilisé, un substrat tel que du terreau est présent dans le bac de culture végétale. Dans ce cas, le biofiltre est en contact physique avec le substrat par la face principale opposée à la face principale étant en regard du couloir de circulation d'air.

Pour pouvoir jouer un rôle de régulateur hydrique, le biofiltre doit pouvoir humidifier l'air. Ainsi, lors de son utilisation, le biofiltre est humide. L'eau peut provenir du substrat via l'arrosage du substrat ou par un réservoir d'eau contenu dans le pot de culture végétale, dans une réserve libre ou dans un matériau poreux, par exemple des billes d'argile, formant le couloir de circulation d'air.

L'apport d'eau peut être réalisé par capillarité (par exemple avec un support en fibres hydrophiles), par arrosage ou par micro-irrigation.

La régulation hydrique est rendue possible grâce au changement de phase de l'eau, le biofiltre chargeant l'air en eau sous forme de vapeur.

Le positionnement du biofiltre à l'intérieur du bac de culture végétale nécessite qu'une de ses faces principales soit en contact avec le substrat et que l'autre de ses faces principales soit en contact avec un couloir de circulation d'air.

Dans un mode de réalisation particulier, le biofiltre est positionné entre une paroi interne du pot et le substrat. Dans ce mode de réalisation, le biofiltre peut être soit positionné au fond du pot, soit positionné sur les parois latérales du pot. Il peut également épouser la forme globale du pot (fond + parois latérales). Dans ce cas un moyen, tel que vu précédemment, permet d'assurer la présence d'un couloir d'air entre le biofiltre et le pot. Ce mode de réalisation est bien entendu applicable au cas où le bac de culture serait disposé verticalement.

Dans un autre mode de réalisation particulier, le biofiltre est positionné à l'intérieur du volume occupé par le substrat. Dans ce cas, le substrat peut donc être en contact avec le pot ou séparé de celui-ci par un géotextile et/ou des billes d'argiles par exemple. Le biofiltre présente alors une face principale en contact avec un couloir d'air et une face principale en contact physique avec le substrat. Ce couloir peut, par exemple, être obtenu avec un biofiltre sur forme de non-tissé enroulé de sorte à former un puits à l'intérieur du substrat, par exemple sous la forme d'un cylindre ou d'un parallélépipède. Le biofiltre est avantageusement positionné de sorte à ce qu'il émerge de la surface du substrat, il peut également être totalement immergé et éventuellement surmonté d'une grille empêchant le substrat de s'introduire à l'intérieur du puits. La circulation d'air, et donc la purification et l'hydratation de l'air, ont lieu à l'intérieur du puits formé par le biofiltre. Ce mode de réalisation est compatible avec le précédent selon lequel le biofiltre est positionné entre une paroi interne du pot et le substrat.

De manière générale, l'air est traité en étant au contact du biofiltre. Il n'est pas nécessaire que l'air ne traverse le biofiltre pour être traité. Au contraire, le traitement de l'air est avantageusement réalisé sans que l'air ne traverse le biofiltre.

Dans un autre mode de réalisation particulier, le bac de culture végétale comprend plusieurs biofiltres. Dans ce mode de réalisation particulier, les biofiltres peuvent être soit tous positionnés au sein du substrat, soit positionné(s) entre le pot (fond et/ou parois latérales) et le substrat et/ou positionné(s) au sein du substrat. Ce mode de réalisation est bien entendu applicable au cas où le bac de culture serait disposé verticalement.

Le bac de culture végétale selon l'invention permet de purifier (dépolluer) et d'humidifier un volume de 50 m³ à 250 m³ d'air en 120 minutes par mètre carré de biofiltre exposé à l'air, plus avantageusement 100 m³ à 180 m³ d'air.

Cette performance peut être optimisée en utilisant un ventilateur d'air permettant d'augmenter le flux d'air à travers le biofiltre. Selon la direction de l'air ventilé, on peut également parler d'accélérateur d'air.

De manière avantageuse, lorsque le biofiltre forme un puits, cet accélérateur est positionné au sein du substrat ce qui limite fortement, voire supprime totalement, les nuisances sonores dues au fonctionnement de celui-ci.

Le bac de culture végétale présente un volume avantageusement compris entre 60 litres et 100 litres, plus avantageusement entre 70 litres et 85 litres.

De manière générale, la quantité de substrat, par exemple du terreau horticole, est suffisante pour assurer la vie des microorganismes pour dépolluer et humidifier l'air. Les plantes permettent de maintenir les microorganismes en vie et, éventuellement, d'en assurer le développement.

### BREVE DESCRIPTION DES FIGURES

L'invention et les avantages qui en découlent ressortiront mieux des figures données afin d'illustrer l'invention et non de manière limitative.
La figure 1 représente un bac de culture intégrant un biofiltre selon l'invention.
La figure 2 est une coupe d'un bac de culture végétale selon l'invention.
La figure 3 illustre des flux turbulents qui agitent l'air et augmentent ainsi la quantité d'air en contact avec le biofiltre.

### EXEMPLES DE REALISATION DE L'INVENTION

### Exemple 1 : Formation d'un biofiltre en non-tissé imprégné de microorganismes

Des fibres de chanvre sont imprégnées avec des microorganismes, par exemple un mélange de *Yarrowia lipolytica, Trichoderma longibrachiatum* et *Pseudomonas putida,* en milieu aqueux additionné d'alginate de sodium. L'imprégnation se fait avantageusement par trempage des fibres dans la solution de microorganismes. Après égouttage et éventuellement séchage des fibres, un non-tissé est formé à partir des fibres de chanvre imprégnées.

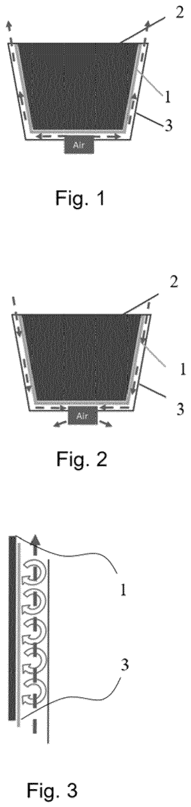

Le biofiltre **1** ainsi obtenu présente des aspérités conférant une rugosité au non-tissé. Cette rugosité permet la création d'une couche d'air limite turbulente qui assure un meilleur contact entre l'air et le biofiltre (figure 3).

### Exemple 2 : bac de culture végétale comprenant un biofiltre selon l'invention

Un matériau poreux, par exemple des billes d'argile, peut être positionné au fond d'un pot extérieur **3** (figures 1 et 2). Un biofiltre **1** obtenu par découpage à des dimensions adéquates du biofiltre de l'exemple 1, est positionné à l'intérieur du pot. Le biofiltre peut reposer sur un matériau poreux, par exemple des billes d'argiles. Ce matériau poreux peut également être ajouté entre les parois latérales du pot et le biofiltre **1.**

Du terreau **2** et une plante (non représentée) sont positionnés dans le volume formé par le biofiltre **1,** le biofiltre **1** est ainsi en contact physique avec le terreau **2.**

## Revendications

1. Bac de culture végétale comprenant un pot (3) et un biofiltre (1) comprenant un support à base de fibres, imprégné de microorganismes, ledit support comprenant au moins deux faces principales,
le biofiltre étant positionné dans un volume délimité par ledit pot,
ledit bac de culture végétale présentant un couloir de circulation d'air sur une face principale du biofiltre, et l'autre face principale du biolfiltre étant destinée à être en contact physique avec un substrat (2) pour la culture végétale.

2. Bac de culture végétale selon la revendication 1, ***caractérisé* en ce que** les microorganismes sont choisis dans le groupe constitué des genres suivants : *Bacillus* ; *Rhodococcus* ; *Pseudomonas* ; *Micrococcus* ; *Phanerochaete* ; *Yarrowia* ; *Trichoderma* ; et leurs mélanges.

3. Bac de culture végétale selon l'une des revendications précédentes, ***caractérisé* en ce que** lesdites fibres sont des fibres végétales.

4. Bac de culture végétale selon l'une des revendications précédentes, ***caractérisé* en ce que** lesdites fibres sont choisies dans le groupe comprenant les fibres de lin, les fibres de chanvre et les fibres de blé.

5. Bac de culture végétale selon l'une des revendications précédentes, ***caractérisé* en ce que** le biofiltre est un non-tissé présentant une épaisseur moyenne comprise entre 1 mm et 10 mm, avantageusement entre 2 mm et 4 mm.

6. Bac de culture végétale selon l'une des revendications précédentes, ***caractérisé* en ce que** le biofiltre est un non-tissé présentant un grammage compris entre 400 g/m² et 750 g/m², avantageusement entre 450 g/m² et 550 g/m².

7. Bac de culture végétale selon l'une des revendications précédentes, ***caractérisé* en ce que** lesdites fibres ont une longueur moyenne comprise entre 5 cm et 25 cm.

8. Bac de culture végétale selon l'une des revendications précédentes, ***caractérisé* en ce que** ledit couloir de circulation d'air est formé par un grillage ou un matériau poreux.

9. Bac de culture végétale selon l'une des revendications précédentes, ***caractérisé* en ce que** le bac de culture présente un volume compris entre 60 litres et 100 litres, avantageusement entre 70 litres et 85 litres.

10. Bac de culture végétale selon l'une des revendications 1 à 7, ***caractérisé* en ce que** le bac de culture végétale peut être un mur végétal.

11. Utilisation du bac de culture végétale selon l'une des revendications 1 à 10 pour dépolluer et pour humidifier l'air.
